# EUROPÄISCHE PATENTANMELDUNG

(11) **EP 1 074 371 A1**
(43) Veröffentlichungstag der Anmeldung: **07.02.2001**
(21) Anmeldenummer: 00115008.5
(22) Anmeldetag: 21.07.2000
(51) Int. Cl.: B29C 43/02

(54) **Verfahren und Vorrichtung zum Herstellen mikrostruktierter Teile**

(30) Priorität: 06.08.1999 DE 19937097
(71) Anmelder: Harting Elektro-optische Bauteile GmbH & Co. KG., 31162 Bad Salzdetfurth (DE)
(72) Erfinder: von Papen, Georg, 31162 Bad Salzdetfurth (DE); Kragl, Hans, Dr., 31199 Diekholzen (DE); Marheine, Carsten, Dr., 31141 Hildesheim (DE)
(74) Vertreter: Sties, Jochen, Dipl.-Ing.

(57) **Zusammenfassung**

Eine Vorrichtung zum Heißpressen von mikrostrukturierten Bauteilen mit einem Gesenk (12) und einem Stempel (20) ist dadurch gekennzeichnet, daß eine Heizvorrichtung (16, 28, 34) vorgesehen ist, mittels der ein in das Gesenk (12) eingefülltes Material (36) erwärmt werden kann, und daß der Stempel einen kleineren Querschnitt hat als das Gesenk (12), so daß ein Spalt (s) gebildet ist, durch den Material beim Eindrücken des Stempels (20) in das Gesenk (12) aus diesem entweichen kann.

## Beschreibung

Die Erfindung betrifft ein Verfahren zum Herstellen mikrostrukturierter Teile durch ein Preßverfahren sowie eine Vorrichtung zum Heißpressen.

Mikrostrukturierte Bauteile können aus Kunststoff bestehen und dienen beispielsweise als Fresnell- oder Mikrolinsen, als Substrat für integriert-optische Strukturen, als hochpräzise Aufbauträger für elektrische und/oder optische Bauteile sowie als fluidische Mikro-Systeme für chemische und medizinische Analysentechnik. Alle diese Teile zeichnen sich durch eine im Mikrometerbereich präzise Oberflächenstruktur aus Nuten, runden oder eckigen Erhebungen und Vertiefungen sowie anderen Strukturen aus, die als gemeinsames Merkmal immer frei von Hinterschneidungen sein müssen. Vorteilhaft wird ein thermoplastisches Material verwendet, wobei wegen der hohen Rüstkosten des Mikrostrukturspritzgusses und der beim Spritzguß dünner Folien typischerweise auftretenden Fließprobleme gerne auf Heißpreßvorrichtungen zurückgegriffen wird.

Im Stand der Technik bekannt sind allgemein Heißpreßvorrichtungen, die ein Gesenk sowie einen Stempel aufweisen, der in das Gesenk eingedrückt werden kann. Wenn der Stempel vollständig in das Gesenk eingedrückt ist, verbleibt zwischen diesen beiden Teilen ein abgeschlossener Hohlraum, der exakt dem zu pressenden Formteil entspricht. Der Preßvorgang beginnt mit dem Einfüllen des zu pressenden Materials, das ein Duroplast ist und in der Form von Pulver oder Granulat vorliegen kann, in das Gesenk. Dann wird der Stempel in das Gesenk eingefahren, so daß das eingefüllte Material verpreßt wird. Anschließend wird das Material durch Heizen des Gesenks und/oder des Stempels erwärmt, wodurch eine Polymerisierung ausgelöst wird. Nach Abschluß der Polymerisierung wird der Stempel aus dem Gesenk herausgezogen, so daß das gepreßte Formteil entnommen werden kann. Auf diese Weise wurden bisher Massenartikel hergestellt, bei denen hinsichtlich der Genauigkeit keine übermäbig hohen Anforderungen gestellt wurden.

Der Grund für die Verarbeitung von Duroplasten mittels einer Heißpresse liegt darin, daß ein großer Teil der Duroplaste unter Wärmeeinwirkung aushärtet. Aus diesem Grunde kommt eine Verarbeitung in einem Schneckenextruder nicht in Frage; die dabei auftrenden Reibungskräfte würden dazu führen, daß das Material durch die Reibungswärme bereits in der Schnecke polymerisieren und somit die weitere Verarbeitung blockieren würde.

Dagegen ist der Schneckenextruder besonders geeignet für die Bearbeitung von Thermoplasten; die dabei auftretende Reibungswärme ist günstig, da sie die zu erbringende Heizleistung verringert. Außerdem führen die von der Schnecke auf das Material ausgeübten Scherkräfte zu einer guten Durchmischung des geschmolzenen Materials, so daß eine größere Homogenität der Schmelze erreicht wird. Dies wirkt sich günstig auf die Eigenschaften des Bauteils aus. Jedoch ist die Abformung mikrostrukturierter Formeinsätze oder Werkzeuge im Standard-Spritzgußverfahren schwierig, da sich beim Einspritzen des Materials in das Werkzeug, dessen Temperatur deutlich unterhalb der Temperatur der Schmelze liegt, eine kühle Randschicht an der Schmelze bildet. Diese kühlere Haut wird durch die nachströmende Schmelze in das Werkzeug und gegen dessen Wand gepreßt; sie erschwert allerdings das exakte Abformen mikrostrukturierter Werkzeuge.

Aus dem Stand der Technik ist ferner ein Verfahren zum Heißpressen sowie eine Maschine zum Durchführen dieses Verfahrens bekannt, die von der Firma JenOptik vertrieben wird und dazu dient, mikrostrukturierte Bauteile herzustellen. Zu diesem Zweck wird in der Heißpresse ein mikrostrukturiertes Formteil angeordnet, das ein Negativabbild der Oberfläche des herzustellenden mikrostrukturierten Bauteils ist. Diese mikrostrukturierte Formteil kann in an sich bekannter Weise beispielsweise durch Nickelabformtechnik von einem Silizium-Masterteil hergestellt werden.

Das Ausgangsmaterial wird bei diesem Heißpreßverfahren in der Form einer Platte zugeführt, die auf das Gesenk bzw. das abzuformende Formteil aufgelegt wird. Dann wird die Kunststoffplatte von der Oberfläche her erwärmt. Die Presse baut einen mechanischen Druck auf, sobald die Kunststoffoberfläche so weit geschmolzen ist, daß die Mikrostruktur abgeformt werden kann. Eine durchgehende Verformung der Kunststoffplatte wird nicht durchgeführt; dies ist auch nicht machbar, weil dann unter dem von der Presse erzeugten Druck das Kunststoffmaterial wegfließen würde, so daß der erforderliche Druck nicht aufgebaut werden könnte.

Dieses Verfahren ist insgesamt extrem aufwendig. Um mikrostrukturierte Kunststoffteile in einer Heißpreßvorrichtung in hoher Qualität herstellen zu können, ist es wichtig, die optimalen Gußmassenparameter, wie sie typischerweise bei Spritzguß vorliegen, so genau wie möglich zu simulieren; es sollten also die optimale Verformungstemperatur des zu pressenden Materials sowie der zugehörige Druck auf das Material bei der Abformung eingehalten werden. Im Gegensatz zum Spritzguß ist die Einhaltung dieser Parameter in einer Heißpresse schwierig, weil das zu verpressende Material in Form einer als Halbzeug einzulegenden Kunststoffplatte in die Heißpresse eingelegt wird. Diese Platte kann zunächst nicht in perfekter Passung in die Abformkavität des Heißpreßwerkzeugs eingelegt werden, weil sie diese Form ja erst durch den Preßvorgang annehmen soll. Ein Druckaufbau in der Kavität und die nur unter Druck mögliche Temperaturerhöhung auf die ideale Verformungstemperatur sind zunächst also nicht möglich. Ohne den entsprechenden Druck in der Kunststoffmasse würden sich bei der notwendigen Temperaturerhöhung Blasen in der Kunststoffmasse bilden, die das gepreßte Formteil schließlich unbrauchbar machen würden. Somit muß die Erwärmung der Kunststoffplatte in sehr aufwendiger Weise gesteuert werden. Die Erwärmung der Plattenoberfläche alleine ist im Hinblick auf eine optimale Verformungstemperatur und einen optimalen Verformungsdruck ein schwer zu kontrollierender Prozeß, da der Verformungsvorgang zu einem Zeitpunkt stattfinden muß, an dem sich der Plattenkern noch in einem weitgehend festen Zustand befindet. Somit ist eine sehr aufwendige, computergesteuerte Regelung erforderlich. Ferner ist eine Verformung der gesamten Platte, etwa um eine auch im großen dreidimensionale Struktur zu erzeugen, damit nicht möglich. Schließlich dürfte es schwierig sein, nach diesem Verfahren sehr dünne Kunststoffplatten mit definierter Dicke zu erzeugen, da die Anordnung druckgesteuert ist.

Ein weiteres Problem bei der Verwendung von Halbzeug in der Form von Kunststoffplatten ist der Einschluß kleiner Luftblasen zwischen der Kunststoffplatte und dem Formeinsatz. Diese Luftblasen können auch mit noch so großem Nachdruck nachträglich nicht mehr entfernt werden. Aus diesem Grunde ist bei der bekannten Heißpresse eine evakuierbare Arbeitskammer erforderlich, innerhalb derer sich die eigentliche Plattenpresse befindet. Nur so können eingeschlossene Luftblasen vermieden werden. Der technische Aufwand zur Realisierung des Vakuumgefäßes ist allerdings erheblich.

Die Erfindung schafft ein Verfahren und eine Vorrichtung zur Durchführung des Verfahrens, mit dem bzw. mit der mikrostrukturierte Bauteile mit sehr geringem Aufwand erzeugt werden können. Die Erfindung basiert auf der Erkenntnis, daß ein an sich bekanntes Heißpreßverfahren, bei dem nun aber thermoplastisches Kunststoffgranulat in das Gesenk der Heißpresse eingefüllt wird, dazu geeignet ist, mikrostrukturierte Bauteile herzustellen. Das erfindungsgemäße Heißpreßverfahren enthält die folgenden Schritte: Zunächst wird in die Heißpresse ein mikrostrukturierter Formeinsatz eingelegt. Dann wird in das Gesenk ein thermoplastisches Kunststoffgranulat eingefüllt, das einen Korndurchmesser in der Größenordnung von 1 bis 2 mm hat. Anschließend wird das Kunststoffgranulat erwärmt, so daß es wenigstens teilweise schmilzt. Daraufhin wird der Stempel in das Gesenk gedrückt, wobei ein Teil des eingefüllten Materials durch einen Spalt zwischen dem Gesenk und dem Stempel austreten kann. Anschließend wird das Kunststoffgranulat weiter erwärmt. Wenn der Stempel weit genug in das Gesenk eingedrückt ist und der gewünschte Druck erreicht ist, wird das gepreßte Material abgekühlt. Daraufhin kann der Stempel aus dem Gesenk zurückgezogen werden, und das mikrostrukturierte Bauteil kann entnommen werden.

Dieses Verfahren beruht auf der überraschenden Erkenntnis, daß trotz der Verwendung von Kunststoffgranulat als Ausgangsmaterial ein mikrostrukturiertes Bauteil erhalten wird, das völlig frei von Lufteinschlüssen ist. Solche Lufteinschlüsse würden anders als bei herkömmlichen Formteilen das Bauteil völlig unbrauchbar machen, da sie sowohl die optischen Eigenschaften des mikrostrukturierten Bauteils als auch die Genauigkeit der mikrostrukturierten Oberfläche erheblich beeinträchtigen würden. Das Entweichen der zwischen den einzelnen Granulatkörnern enthaltenen Luft während des Erwärmens des Kunststoffgranulats erfolgt unter der Wirkung der Schwerkraft, so daß sänmtliche eingeschlossene Luft während des Schmelzens des Kunststoffgranulats immer weiter nach oben und schließlich aus dem Gesenk heraus verdrängt wird. Der zum Verschmelzen der Granulatkörner erforderliche hohe mechanische Druck kann erreicht werden, indem das Austreten des Kunststoffs durch den Spalt zwischen dem Stempel und dem Gesenk kontrolliert wird.

Unter dem Begriff "Kunststoffgranulat" wird hier ein Material verstanden, das in der Form von kleinen Zylindern, Perlen, Würfeln oder ähnlichem vorliegt. Die Korngrößen können zwischen 1 und 5 mm (in Einzelfällen auch darüber) bei mechanisch geschnittenem Granulat oder zwischen 100 und 500 µm (in Einzelfällen bis hinunter zu 3 µm) bei Perlpolymerisat betragen.

Zum Erwärmen des in das Gesenk eingefüllten Kunststoffgranulats kann entweder Heißluft verwendet werden, die von außen zugeführt wird, oder es kann der Stempel und/oder das Gesenk beheizt werden. Wichtig ist hierbei eine gleichmäßige Erwärmung des Kunststoffgranulats, um den Aufbau von Spannungen im Material zu verhindern.

Um das gepreßte Material zu kühlen, nachdem der Stempel vollständig in das Gesenk eingedrückt ist, kann der Stempel und/oder das Gesenk gekühlt werden, insbesondere mittels einer Zwangskühlung. Auf diese Weise ergibt sich ein höherer Arbeitstakt.

Das Austreten des Kunststoffmaterials während des Eindrückens des Stempels in das Gesenk durch den Spalt kann dadurch gesteuert werden, daß sich dieser Spalt beim Eindrücken des Stempels in das Gesenk zunehmend verengt. Somit wird dem Austreten des Kunststoffmaterials ein immer höherer Widerstand entgegengesetzt, so daß der erforderliche hohe mechanische Druck in der Heißpresse aufgebaut werden kann. Alternativ kann die Heißpresse im Bereich des Spaltes, durch den das Material aus dem Gesenk entweicht, gekühlt werden. Auf diese Weise wird die Fließfähigkeit des Materials in diesem Bereich herabgesetzt, um im Inneren der Heißpresse den erforderlichen hohen mechanischen Druck aufbauen zu können.

Die Temperatur, auf die das Kunststoffgranulat vor dem Schließen der Presse erwärmt wird, ist vorzugsweise die Glastemperatur des Materials, während die Temperatur, auf die das Kunststoffmaterial nach dem Schließen der Presse erwärmt wird, vorzugsweise die Düsentemperatur des Materials ist. Unter Düsentemperatur wird hier die Temperatur verstanden, die das thermoplastische Material, falls es in einem Spritzgußverfahren verarbeitet wird, beim Durchgang durch die Düse des Schneckenextruders zweckmäßigerweise hat.

Eine erfindungsgemäße Vorrichtung zum Heißpressen mit einem Gesenk und einem Stempel ist dadurch gekennzeichnet, daß eine Heizvorrichtung vorgesehen ist, mittels der ein in das Gesenk eingefülltes Material erwärmt werden kann, und daß der Stempel einen kleineren Querschnitt hat als das Gesenk, so daß ein Spalt gebildet ist, durch den Material beim Eindrücken des Stempels in das Gesenk aus diesem entweichen kann. Diese Vorrichtung ermöglicht es, auf einfache Weise mikrostrukturierte Bauteile mit hoher Genauigkeit abzuformen. In das Gesenk kann Kunststoffgranulat eingefüllt werden, aus dem beim Erwärmen und Zusammenpressen die enthaltene Luft nach und nach entweicht. Somit werden Lufteinschlüsse im Inneren des mikrostrukturierten Bauteils sowie an dessen Oberfläche verhindert. Aufgrund der Verwendung eines Spaltes zwischen dem Stempel und dem Gesenk kann der zum Pressen des Kunststoffgranulats erforderliche hohe mechanische Druck im Inneren aufgebaut werden.

Vorzugsweise ist in dem Gesenk und/oder dem Stempel eine Heizvorrichtung angeordnet. Diese dient dazu, daß in das Gesenk eingefüllte Kunststoffgranulat zu erwärmen. Die Heizvorrichtung kann ein Heißluftgebläse oder eine elektrische Widerstandsheizung sein.

Vorzugsweise ist auch eine Kühlvorrichtung vorgesehen, die in dem Gesenk und/oder dem Stempel angeordnet ist. Diese dient dazu, das gepreßte Material abzukühlen.

Wenn die Kühlvorrichtung im Bereich des Spaltes zwischen dem Gesenk und dem Stempel angeordnet ist, kann ferner auf einfache Weise das Ausfließen des Materials aus der Heißpresse kontrolliert werden, so daß der im Inneren der Heißpresse erzielte hohe mechanische Druck gesteuert werden kann.

In die Heißpresse wird vorzugsweise ein mikrostrukturierter Formeinsatz eingelegt. Auf diese Weise können die verschiedensten mikrostrukturierten Bauteile in ein und derselben Heißpresse hergestellt werden. Vorzugsweise ist der Spalt zwischen dem Gesenk und dem Stempel so ausgestaltet, daß das gepreßte Material den Stempel an mindestens zwei Seiten umgreift. Dies führt dazu, daß das mikrostrukturierte Bauteil beim Abkühlen auf den Stempel aufschrumpft, so daß es beim Herausziehen des Stempels aus dem Gesenk vom Formeinsatz getrennt wird.
Die Erfindung wird nachfolgend unter Bezugnahme auf eine bevorzugte Ausführungsform beschrieben, die in den beigefügten Zeichnungen dargestellt ist. In diesen zeigen:
- Figur 1 in einem schematischen Schnitt eine erfindungsgemäße Heißpresse in einem ersten Zustand;
- Figur 2 in einem schematischen Schnitt eine erfindungsgemäße Heißpresse in einem zweiten Zustand;
- Figur 3 in einem schematischen Schnitt eine erfindungsgemäße Heißpresse in einem dritten Zustand;
- Figur 4 in einem schematischen Schnitt eine erfindungsgemäße Heißpresse in einem vierten Zustand; und
- Figur 5 ein Diagramm der Verlaufs der Temperatur während des Preßvorgangs.

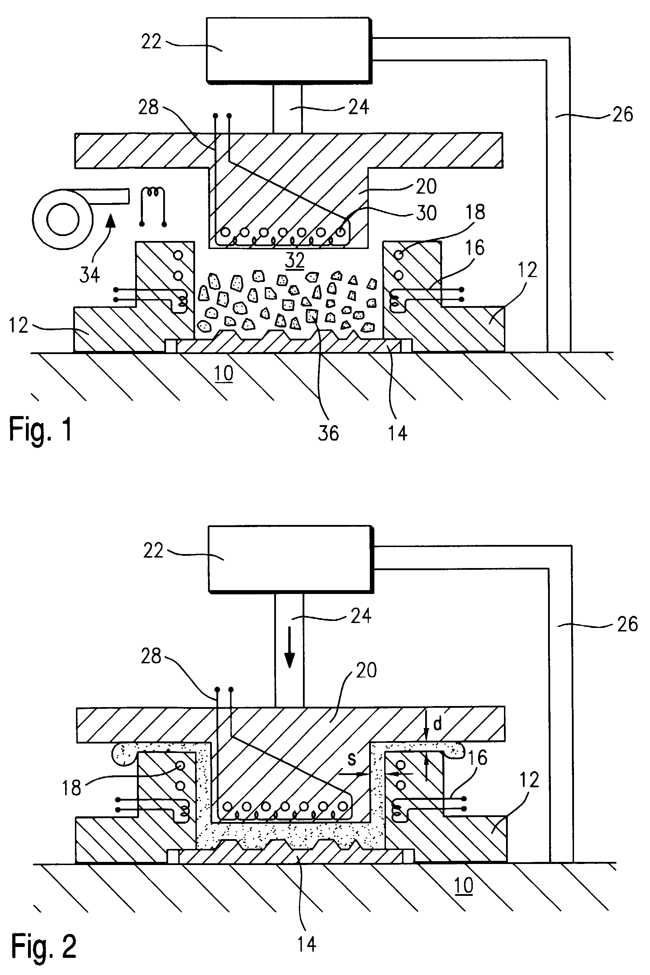

Die in Figur 1 gezeigte Vorrichtung zum Heißpressen weist auf einer Unterlage 10 ein Gesenk 12 auf, in das ein mikrostrukturierter Formeinsatz 14 eingelegt ist. Das Gesenk kann sowohl geheizt als auch gekühlt werden. Zu diesem Zweck ist zum einen eine elektrische Widerstandsheizung 16 und zum anderen eine Kühlschlange 18 vorgesehen.

Weiterhin ist ein Stempel 20 vorgesehen, der mittels einer hydraulischen Betätigungseinheit 22, 24 relativ zum Gesenk 12 verstellt werden kann. Die hydraulische Betätigungseinheit 22, 24 ist über einen Träger 26 an der Unterlage 10 befestigt.

Auch der Stempel 20 kann geheizt und gekühlt werden. Zu diesem Zweck sind eine elektrische Widerstandsheizung 28 sowie Kühlschlangen 30 vorgesehen.

Zum Beheizen der zwischen dem Gesenk 12 und dem Stempel 20 gebildeten Formkavität 32 ist ferner ein Heißluftgebläse 34 vorgesehen.

Die beschriebene Vorrichtung zum Heißpressen dient dazu, in der Formkavität 32 ein mikrostrukturiertes Bauteil zu bilden, dessen bezüglich Figur 1 untere Oberfläche ein umgekehrtes Abbild der mikrostrukturierten Oberfläche des Formteils 14 ist. Zusätzlich zum Formteil 14 kann selbstverständlich auch an der Unterseite des Gesenks 20 ein weiteres mikrostrukturiertes Formteil angebracht werden, um dem mikrostrukturierten Bauteil auf zwei Seiten eine Mikrostruktur einzuprägen.

Die Herstellung des mikrostrukturierten Bauteils beginnt damit, daß in die Formkavität 32 ein Kunststoffgranulat 36 eingefüllt wird. Ein Beispiel für ein geeignetes Material ist Polycarbonat. Es sind grundsätzlich aber alle thermoplastischen Materialien geeignet, die durch ein Heißpressverfahren verarbeitet werden können.

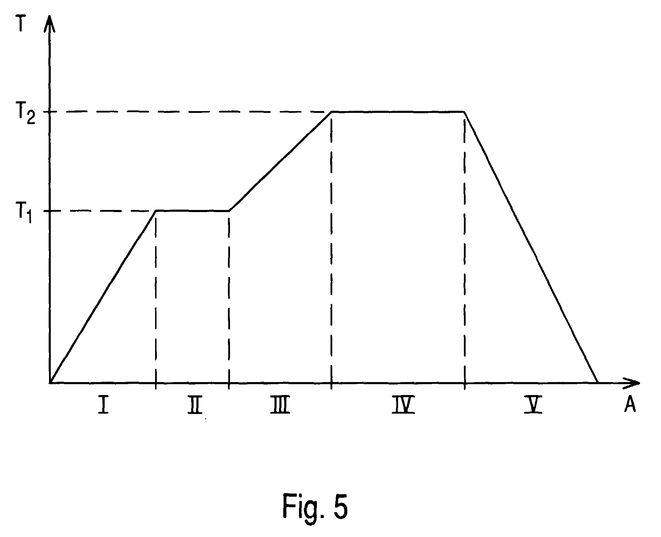

Anschließend wird das Kunststoffgranulat 36 unter Umgebungsdruck und Umgebungsatmosphäre auf eine Temperatur T₁ (siehe Phase I im Diagramm von Figur 5) erwärmt, die der Glastemperatur des Materials entspricht. Die Glastemperatur liegt unterhalb der Temperatur, die das Material, falls es in einem Spritzgußverfahren verarbeitet würde, beim Durchgang durch die Düse eines Schneckenextruders haben würde (Düsentemperatur). Eine Erwärmung über die Temperatur T₁ hinaus ist nicht möglich, da dann der in der Kavität vorhandene Luftsauerstoff zur Oxidation des Kunststoffes führen würde.

Die Erwärmung kann durch die elektrischen Widerstandsheizungen 16, 28 sowie durch das Heißluftgebläse 34 erfolgen. Dabei schmilzt das Kunststoffgranulat nach und nach an den Granulatgrenzen. Dennoch kann sämtlich Luft, die zwischen den Granulatkörnern vorhanden ist, kontinuierlich erweichen, da sich das Granulat infolge der Schwerkraft zuerst an der Unterseite verdichtet, so daß immer ein Weg für die eingeschlossene Luft nach oben zum Entweichen vorhanden ist. Die sich während der Erwärmung auf die Temperatur T₁ bildende Schmelzeschicht legt sich auf die abzubildenden Konturen des Formeinsatzes 14.

Nachdem das Kunststoffgranulat 36 auf die Temperatur T₁ erwärmt ist, wird der Stempel 20 in das Gesenk 12 eingedrückt. Dies ist in Figur 2 gezeigt und entspricht der Phase II im Diagramm von Figur 5. Während des Preßvorgangs werden die sich noch in der Kavität befindenden Luftblasen nach oben zwischen den Granulatkörnern hindurch entfernt.

Die Abmessungen des Gesenks 12 und des Stempels 20 sind so gewählt, daß zwischen diesen beiden Teilen ein Spalt s verbleibt, durch den ein Teil des verflüssigten Kunststoffgranulats aus der Formkavität 32 austreten kann. Je weiter der Stempel 20 in das Gesenk 12 eingedrückt wird, desto enger wird ein Spalt d zwischen der oberen Platte des Stempels 20 und dem Gesenk 12, während die Dicke des Spaltes s zwischen dem Gesenk und dem Stempel immer konstant bleibt. Somit wirkt dem Austreten des flüssigen Kunststoffmaterials aus der Formkavität ein immer höherer Widerstand entgegen, so daß im Inneren der Heißpreßform ein hoher mechanischer Druck aufgebaut werden kann. Dieser Druck kann über 30 N je Quadratmillimeter betragen.

Das Austreten des flüssigen Kunststoffs aus der Formkavität könnte alternativ auch gesteuert werden durch ein kontrolliertes Abkühlen im Bereich des Spaltes s und/oder im Bereich des Spaltes d, beispielsweise mittels der Kühlschlangen 18.

Nach dem Schließen der Presse wird das in der Presse eingeschlossene Material auf die Düsentemperatur erwärmt (siehe Phase III im Diagramm von Figur 5). Hierfür werden die Widerstandsheizungen 16, 28 verwendet. Die Erhöhung der Temperatur auf die Düsentemperatur T₂ ist in dieser Phase möglich, da sich in der Kavität keine eingeschlossen Luft mehr befindet, die zu einer Oxidierung führen könnte. Während des Erwärmens erhöht sich der Druck in der Kavität weiter, da das schon erkaltete Material im Bereich des Spalts zwischen dem Gesenk und dem Stempel den Überlauf aus der Kavität verschließt. Der thermoplastische Werkstoff wird dabei durch den erhöhten Druck auf die Mikrostrukturen des Formeinsatzes gepreßt, wodurch sich eine hochwertige Abbildung ergibt.

Anschließend wird das Material im Inneren der Kavität für eine bestimmte Zeitdauer auf dem erzielten hohen Druck und der Düsentemperatur T₂ gehalten (siehe Phase IV von Figur 5). Dabei verschmelzen die Granulatkörner restlos zu einem homogenen Formteil.

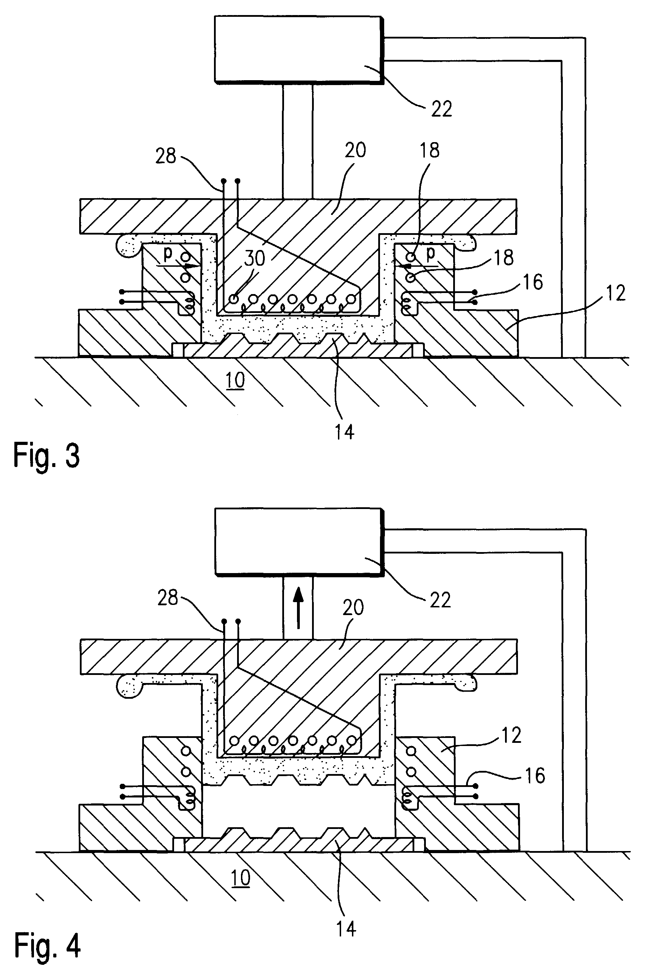

Als letzter Prozeßschritt wird die Kavität gekühlt (siehe Phase V des Diagramms von Figur 5), bis eine Temperatur deutlich unterhalb der Glastemperatur des Materials erreicht ist. Zum Kühlen werden die Kühlschlangen 18, 30 verwendet. Während des Abkühlens schrumpft der Kunststoffgießling auf den Stempel 20 auf. Dies ist durch die Pfeile P in Figur 3 symbolisiert. Dabei entsteht ein hoher Druck auf die Seitenwände des Stempels 20, der beim Herausziehen des Stempels 20 aus dem Gesenk 12 (siehe Figur 4), nachdem eine Temperatur deutlich unterhalb der Glastemperatur des Materials erreicht wurde, die Formtrennung ermöglicht. Das abgehobene Bauteil weist auf seiner bezüglich Figur 4 unteren Fläche ein exaktes Abbild des mikrostrukturierten Formeinsatzes 14 auf.

Das erfindungsgemäße Verfahren kann in einer Anlage ausgeführt werden, die einen einfachen Aufbau hat. Ferner können verschiedene Kunststoffe nacheinander verarbeitet werden, ohne daß hierfür Stillstandszeiten bedingt durch Rüstarbeiten oder Reinigungsarbeiten erforderlich sind. Es kann einfach die Kavität mit einem andersartigen Granulatmaterial befüllt werden. Es müßten dann lediglich einige Parameter, beispielsweise Temperatur und Druck, im Ablaufprogramm geändert werden. Im Vergleich mit einem entsprechenden Spritzgußwerkzeug hat die erfindungsgemäße Heißpresse eine Größe von einigen zehn Zentimetern, so daß sie entsprechend kostengünstig und flexibel ist. Der Aufbau erlaubt einen schnellen Wechsel des abzuformenden Formeinsatzes. Auf ein aufwendiges Auswerfersystem kann verzichtet werden.

## Patentansprüche

1. Verfahren zum Herstellen mikrostrukturierter Teile in einer Heißpresse mit Gesenk (12) und Stempel (20) mittels der folgenden Schritte:
- in die Heißpresse wird ein mikrostrukturierter Formeinsatz (14) eingelegt;
- in das Gesenk wird ein thermoplastisches Kunststoffgranulat (36) eingefüllt;
- das Kunststoffgranulat wird erwärmt, so- daß es wenigstens teilweise schmilzt;
- der Stempel wird in das Gesenk gedrückt, wobei ein Teil des eingefüllten Materials durch einen Spalt (s, d) zwischen dem Gesenk (12) und dem Stempel (20) austreten kann;
- das Kunststoffgranulat wird weiter erwärmt;
- das gepreßte Material wird abgekühlt;
- der Stempel wird aus dem Gesenk zurückgezogen;
- das mikrostrukturierte Bauteil wird entnommen.

2. Verfahren nach Anspruch 1, dadurch gekennzeichnet, daß dem Gesenk Heißluft zugeführt wird, um das Kunststoffgranulat (36) zu erwärmen.

3. Verfahren nach einem der Ansprüche 1 und 2, dadurch gekennzeichnet, daß der Stempel (20) und/oder das Gesenk (12) beheizt wird, um das Kunststoffgranulat zu erwärmen.

4. Verfahren nach einem der vorhergehenden Ansprüche, dadurch gekennzeichnet, daß der Stempel (20) und/oder das Gesenk (12) gekühlt wird, um das gepreßte Material abzukühlen.

5. Verfahren nach einem der vorhergehenden Ansprüche, dadurch gekennzeichnet, daß sich der Spalt (s, d), durch den das Material aus dem Gesenk entweicht, beim Eindrücken des Stempels in das Gesenk zunehmend verengt.

6. Verfahren nach einem der vorhergehenden Ansprüche, dadurch gekennzeichnet, daß der Stempel und/oder das Gesenk im Bereich des Spaltes, durch den das Material aus dem Gesenk entweicht, gekühlt wird.

7. Verfahren nach einem der vorhergehenden Ansprüche, dadurch gekennzeichnet, daß die Temperatur, auf die das Kunststoffgranulat vor dem Schließen der Presse erwärmt wird, die Glastemperatur des Materials ist, und daß die Temperatur, auf die das Kunststoffgranulat nach dem Schließen der Presse erwärmt wird, die Düsentemperatur des Materials ist.

8. Vorrichtung zum Heißpressen mit einem Gesenk (12) und einem Stempel (20), dadurch gekennzeichnet, daß eine Heizvorrichtung (16, 28, 34) vorgesehen ist, mittels der ein in das Gesenk (12) eingefülltes Material (36) erwärmt werden kann, und daß der Stempel (20) einen kleineren Querschnitt hat als das Gesenk (12), so daß ein Spalt (s) gebildet ist, durch den Material beim Eindrücken des Stempels (20) in das Gesenk (12) aus diesem entweichen kann.

9. Vorrichtung nach Anspruch 8, dadurch gekennzeichnet, daß die Heizvorrichtung (16, 28) in dem Gesenk und/oder dem Stempel angeordnet ist.

10. Vorrichtung nach Anspruch einem der Ansprüche 8 und 9, dadurch gekennzeichnet, daß die Heizvorrichtung (34) ein Heißluftgebläse ist.

11. Vorrichtung nach einem der Ansprüche 8 bis 10, dadurch gekennzeichnet, daß eine Kühlvorrichtung (18, 30) vorgesehen ist.

12. Vorrichtung nach Anspruch 11, dadurch gekennzeichnet, daß die Kühlvorrichtung (18, 30) in dem Gesenk und/oder dem Stempel angeordnet ist.

13. Vorrichtung nach Anspruch 12, dadurch gekennzeichnet, daß die Kühlvorrichtung im Bereich des Spaltes zwischen dem Gesenk und dem Stempel angeordnet ist.

14. Vorrichtung nach einem der Ansprüche 8 bis 13, dadurch gekennzeichnet, daß im Gesenk und/oder am Stempel ein mikrostrukturierter Formeinsatz (14) vorhanden ist.

15. Vorrichtung nach einem der Ansprüche 8 bis 14, dadurch gekennzeichnet, daß der Spalt (s) zwischen dem Stempel und dem Gesenk so ausgebildet ist, daß das gepreßte Material den Stempel (20) an mindestens zwei Seiten umgreift.
